# EUROPEAN PATENT APPLICATION

(11) **EP 1 133 909 A2**
(43) Date of publication of application: **19.09.2001**
(21) Application number: 01302024.3
(22) Date of filing: 06.03.2001
(51) Int. Cl.: A01D 33/08

(54) **A root crop harvester**

(30) Priority: 08.03.2000 GB 0005445; 06.06.2000 GB 0013816; 18.08.2000 GB 0020252
(71) Applicant: Gossop, John, Near Goole North Humberside DN14 8DW (GB)
(72) Inventor: Gossop, John, Near Goole North Humberside DN14 8DW (GB)
(74) Representative: Waddington, Richard

(57) **Abstract**

A root crop harvester (1) comprises; a main frame (7), a plurality of wheels (3) supporting the frame, a plurality of shares (6), a first web (8) for receiving both large (20) and small (21) root crops, a plurality of graders (2a, 2b) for grading the root crops (20, 21) by size and interconnecting conveyors (4a) and (4b). A second web (10) is also provided for transporting the smaller crop (21) to a cleaning module (16), the cleaning module (16) for removing debris from the root crop (21). Also provided is a discharge elevator (18) for discharge of the root crop (20, 21) usually to an accompanying trailer.

## Description

The present invention relates to a harvester, and particularly, although not exclusively, relates to a harvester for root crops, or the like.

Traditional harvesters for root crops, for example, potatoes or sugar beet, generally comprise means for picking the crop up from the surface of a field and a series of conveyor belts or webs which transfer the crop, via a cleaning apparatus where the crop is cleaned of excess dirt, soil, stones, clods and roots etc., to a final storage area where the cleaned crop awaits transfer to a trailer.

Such root crop harvesters are relatively quick and efficient. However, in conditions where the soil is very dry, the potatoes are often prone to damage, for example bruising, thereby decreasing the crop's quality and value. This is particularly true of the larger potatoes of a crop. Most of the damage occurs when the potatoes fall from the conveyors down to the cleaning apparatus but also during the cleaning process itself since the apparatus usually consists of either a set of moveable axial rollers or bank of star rollers. The forward speed and output of the harvester is limited by the ability of the cleaning apparatus to clean the crop.

Axial rollers tend to cause more damage than star rollers in dry conditions. Star roller separators and other types of separators are adjustable to allow more or less extraction of soil and trash. However, when adjusted for maximum soil extraction, they also extract some small potatoes.

Such harvesters are typically as wide as their intake means and a first web or sieving conveyor, with the cleaning apparatus and haulm removing apparatus being a similar width and situated behind the intake means. The width is limited because the harvester needs to be transported on public roads between fields, and also over bridges on the roads. This provides a limit of about 2m width.

With a view to addressing or mitigating the problems of the prior art mentioned above, or otherwise, it is an aim of at least embodiments of the present invention to provide a root crop harvester in which the degree of damage to the crop which is being harvested is reduced and the forward speed and output of the harvester increased.

According to the present invention, there is provided a harvester for harvesting a crop, the harvester comprising crop lifting means for lifting the crop from a soil surface, crop cleaning means for removing debris from the crop, and at least one crop grading means for separating the crop into different sizes, the crop grading means being operable to allow crops greater than a pre-determined size to by-pass the crop cleaning means.

The crop grading means may be adjustable.

The harvester may further comprise soil digging means for breaking up a layer of the soil thereby exposing the crop for harvesting,

The harvester may include crop storage means for storing the crop following harvesting.

The soil digging means may be either one or a plurality of shares which are arranged to cut into the ground, for example, a potato field as the harvester is drawn in a forward direction.

Preferably, adjustment of the grading means allows a varying portion of a crop to be diverted to lower, middle or upper streams of crop and debris.

The crop lifting means may comprise at least one section, preferably two sections that is/are operable to move between operating and travelling configurations. The or each section may be raised to a generally upright position to reduce the width of the crop lifting means for transportation or travelling. Preferably, there are two movable sections, one either side of a central section of the crop lifting means. The crop lifting means may be foldable for transport.

The crop lifting means may be operable to lift the crop off the ground surface once the crop is exposed on the soil surface. Preferably, the crop lifting means comprises a web. Preferably, the web carries the crop in a direction upwardly and towards the rear of the harvester. The web may be a rubber web, although any suitable material may be used. Preferably, the web has apertures therethrough through which particles may pass. The particles may be dirt, soil, stones and other debris etc.

Preferably, the crop does not pass through the apertures and is passed upwardly to the top of the web.

The grading means may comprise at least one grader. Preferably, the grading means comprises two graders. The first grader may comprise a gap between the uppermost portion of the web and a first conveyor situated adjacent the web, the conveyor allowing the crop to by-pass the cleaning means by taking it directly to the second grader. The second grader may comprise a gap between the first conveyor and a second conveyor. The second grader may be operable to sort between two further cleaning means. The, or each, grader may further comprise an adjustable roller, or rows of stars or spools or any combination thereof situated within each gap thereby effectively making two smaller gaps. The crop may pass through these smaller gaps. The roller may assist the removal of debris from the gap. The, or each, grader may be adjustable such that crops of, or greater than, a certain pre-determined size are separated from crops below the pre-determined size. The first grader may be adjustable by increasing or decreasing the distance between the web and the first conveyor. The second grader may be adjustable by increasing or decreasing the distance between the first and second conveyors. Graders such as webs, sieves, spools, coils or others may be used.

Preferably, the adjustment of the grading means allows a varying proportion of the crop to be diverted to the higher stream of crop and debris depending on the soil and crop conditions.

Preferably, a second web is situated underneath and preferably to the rear of the first web. Crops which are below the pre-determined size may fall downwards through the first grader and land on the second web. The second web may be similar to the first web but is preferably shorter since it does not carry the larger crops. At least one haulm (stalks and roots of crops) roller and/or haulmfinger may be situated between the first and second web and the first grader. Debris which is attached to the crop falling through the first grader onto the second web may be removed by the at least one haulm roller and/or haulm finger. Preferably, the roller, rows of stars or spools of the first grader have spaces opposite the or each haulm finger to allow movement of the or each haulm finger. The second web may be replaced by other transport means, such as star rollers.

The second web may carry the crop to the crop cleaning means. The crop cleaning means may comprise axial rollers or star rollers or any combination thereof. The crop cleaning means serves the function of abrading the crop so that remaining debris stuck to the surface of the crop may be removed. The crop cleaning means is also operable to crumble and remove clods and remaining loose soil.

Following cleaning, the crop may be passed to the crop storage means. The crop storage means may communicate with a crop discharge conveyor or elevator which may discharge the cleaned crop to a trailer for subsequent delivery. Alternatively, following cleaning, the crop may be passed directly to a crop discharge elevator.

Crops which are of, or greater than, a pre-determined size set by the grader may by-pass the second web and crop cleaning means as the crop is passed onto the first conveyor. The first conveyor may take the larger size crop to the second grader which, as in the first grader, is adjustable to separate crops of a pre-determined size.

The second grader may be present to separate crops not efficiently separated by the first grader. Crops may fall from the first conveyor, through the second grader directly onto the cleaning module where they meet up with smaller sized crops already separated by the first grader. A second set of at least one haulm roller and/or haulm finger may be situated between the first and second conveyers and the cleaning module. Crops which do not pass through the second grader may be passed onto the second conveyor which takes the large crops directly to the crop storage means or discharge elevator. Preferably, the crop grading means is located immediately downstream of the first web. Alternatively, or additionally, the crop grading means may be located downstream of the second web. The conveying means may comprise webs with suitably spaced bars to assist grading. The conveyor means may include projections at spaced intervals thereon. The projections may be spaced along the length and/or the width of the conveyor means.

The second grader may be present to separate the remaining crop and trash into two further graded streams of crop and trash. Crop and trash may fall from the first conveyor through the second grader onto a middle crop cleaning means. Following cleaning the crop may be passed via a conveyor to the crop storage means. Alternatively following cleaning, the crop may be passed directly to a crop discharge elevator.

Crops which are of, or greater than, a pre-determined size set by the second grader may by-pass the middle crop cleaning means and be passed onto the second conveyor. The second conveyor may take the largest size crop and debris to an upper crop cleaning means.

Following cleaning the crop may be passed via a conveyor to the crop storage means. Alternatively, following cleaning the crop may be passed directly to a crop discharge elevator.

The middle and upper crop cleaning means may be provided each with a trash conveyor to return the soil and debris back to the soil surface. The conveying means may comprise webs with suitably spaced bars to assist grading. The conveyor means may include projections at spaced intervals thereon. The projections may be spaced along the length and/or the width of the conveyor means. These projections may assist the crop moving along the conveyor without rolling back. They may also keep the grading means clear of trash such as stalks and weeds which may accumulate in the grading means and cause blockages.

The first and second grading means may be adjustable to vary the proportion of material that passes over each of the crop cleaning means. The number of crop cleaning means may vary according to the cleaning capacity required.

Suitably, the harvester is adapted to be towed behind a tractor, however, the harvester may be self-propelled. Preferably, the harvester a crop harvester. Even more preferably, the harvester is used for harvesting potatoes, sugar beet or vegetables. Although the layout of sugar beet harvesters is somewhat different from potato harvesters, under conditions where the roots have no soil sticking to them, it would be advantageous to grade out the larger roots using the grader, allowing the smaller roots, clods and stones to go over the second conveyor and cleaning module.

The harvester may further comprise a manual picking table. This may be present when the cleaning means is unable to remove all of the debris and manual workers are used to finish the cleaning job. Preferably, the manual picking table is located downstream of the grading means. In circumstances where a manual picking table is provided, the cleaning means may or may not be provided.

According to a second aspect of the present invention, there is provided a harvester for harvesting a crop, the harvester comprises crop lifting means for lifting the crop from a soil surface, crop cleaning means for removing debris from the crop, and crop grading means for separating the crop into different sizes, the crop grading means being operable to allow crops greater and/or smaller than a pre-determined size to be graded into separate streams.

The crops may be graded into two or more streams. Preferably, a first stream comprises a first graded portion of the crop and debris, and a second stream comprises a second graded portion of the crop and debris. Preferably, the first stream comprises small crop and debris which passes over a first cleaning means and, preferably, the second stream comprises large crop and debris which passes over a second crop cleaning means. A trash conveyor means may be provided to return the soil and debris from the second cleaning apparatus back to the soil surface. A third stream may provide a third graded portion of the crop and debris. The streams may be located one above the other.

The crop grading means may comprise an inclined moving belt. The inclination, position and speed of the belt may be adjustable. Advantageously, the larger crop and debris roll down the face of the inclined belt while the smaller crop and debris remain on the belt. The grading effect is the opposite to earlier aspects in that the smaller crop and debris are carried to the higher stream, and the larger crop and debris are carried to the lower stream.

According to a third aspect of the present invention, there is provided a grader operable to be attached to a root crop harvester having crop lifting means, crop cleaning means, the grader comprising at least one by-pass means attached to the crop lifting means such that material of a pre-determined size may by-pass the cleaning means or may be graded into separate streams.

The grader may be adjustable to vary the pre-determined size of material which may bypass the cleaning means.

All of the features disclosed herein may be combined with any of the above aspects, in any combination.

For a better understanding of the invention, and to show how embodiments of the same may be carried into effect, reference will now be made, by way of example, to the accompanying diagrammatic drawings in which:-
Figure 1 is a schematic view of a first embodiment of root crop harvester;
Figure 2 is a schematic view of a second embodiment of root crop harvester;
Figure 3 is a schematic view of a third embodiment of root crop harvester;
Figure 4 is a schematic view of a fourth embodiment of root crop harvester;
Figure 5 is a schematic side view of a fifth embodiment of root crop harvester;
Figure 6 is a schematic view from above of the harvester in Figure 5;
Figure 7 is a schematic front view of the fourth embodiment with lateral crop lifting means raised for travel; and
Figure 8 is a schematic front view similar to Figure 7, but with the lateral crop lifting means deployed for lifting.

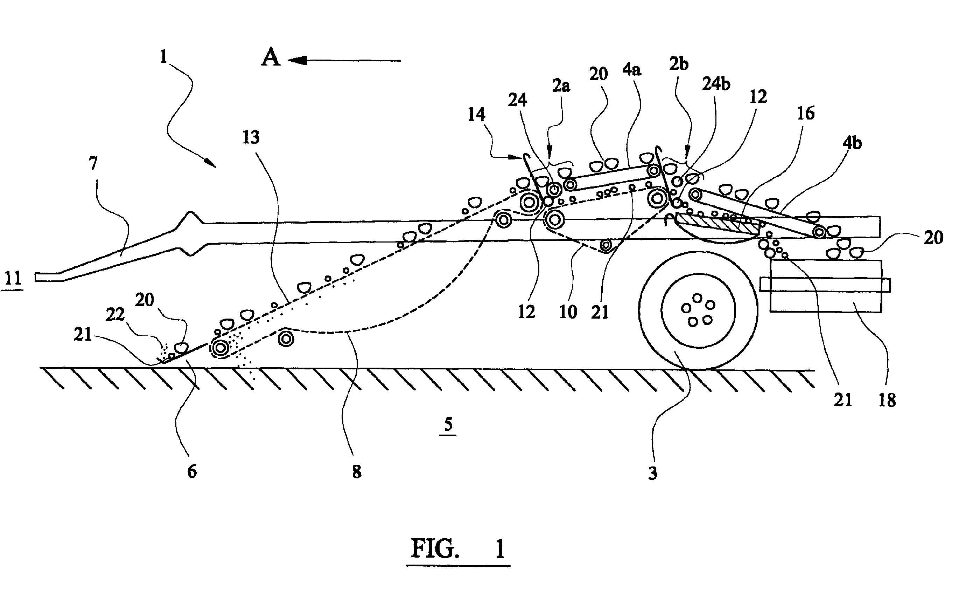

Referring to Figure 1, a root crop harvester 1 is shown comprising: a main frame 7; a plurality of wheels 3 supporting the frame; one or a plurality of shares 6; a first web 8 for receiving both large 20 and small 21 root crops, for example potatoes; one or a plurality of graders 2a & 2b for grading the root crops 20, 21 by size and inter-connecting conveyors 4a and 4b; a second web 10 for transporting the smaller crop 21 to a cleaning module 16; the cleaning module 16 for removing debris from the root crop 21; and a discharge elevator 18 for discharge of the root crop 20, 21 usually to an accompanying trailer.

All of the components of the harvester 1 are attached to the main frame 7 which is supported above a ground surface 5, for example a field of root crops, at its forward end by a conventional tractor unit 11 and at its rearmost end by the wheels 3. The, or each, of the shares 6 are angled downwardly and in a direction towards the front of the frame 7, so that when the tractor 11 pulls the harvester 1 in a forward direction (designated by arrow A), the shares 6 dig into the ground layer 5 and expose a mixture of large potatoes 20, small potatoes 21 and soil/stones etc 22. This mixture 20, 21 and 22 is lifted onto the first web 8 which is driven by a power take-off shaft from the tractor 11 in a direction upwards and towards the rear of the frame 7 of the harvester 1. The smallest soil and stones 22 fall through apertures 13 in the first web 8 and back onto the field 5.

The webs may include projections spaced along the length and/or across the width of thereof to assist in the transport of the crop and to keep the webs clear of trash.

When using prior art harvesters, in which the graders 2a & 2b are not present, all of the crop, i.e. the large potatoes 20, small potatoes 21 and any remaining soil 22, fall from the uppermost portion of the first web 8 onto a second web 10 which then transfers the crop onto the cleaning module 16. The second web may be replaced by a bank of star rollers. Haulm is removed from the potatoes by haulm rollers 12 and haulm fingers 14 as they are transferred from the first web 8 to the second web 10. The cleaning module 16 consists of either a set of axial rollers or a bank of star rollers which shake and abrade the potatoes such that dirt and other excess particles are removed. Now cleaned, the potatoes 20, 21 pass into the discharge elevator 18 and are subsequently discharged into an accompanying trailer.

A disadvantage of such a prior art set up is that, regardless of soil and crop conditions, potatoes of all sizes are passed from the first web 8 onto the second web 10 and over the cleaning module 16 which results in unnecessary bruising and other damage especially to the larger potatoes 20. As a result, the harvester 1 has to be operated at a relatively low speed.

However, with the embodiment of the present invention in place over the harvester 1, i.e. the two graders 2a & 2b and conveyors 4a & 4b, the second web 10 and cleaning module 16 are by-passed by the larger potatoes thereby minimising the potential for bruising and allowing the harvester 1 to be operated at higher speeds. The harvester's output is also increased because less total crop volume per acre is passed over the cleaning module.

The two sets of graders 2a and 2b comprise two gaps formed either side of an adjustable roller, rows of stars or spools designated in the figure by 24a, 24b

The operator adjusts the two sets of graders 2a & 2b according to soil and crop conditions such that the larger potatoes 20 travel over the graders 2a & 2b and the conveyors 4a & 4b which carry the potatoes 20 directly to the discharge elevator 18. In conditions where the soil is dry and made up of small, fine particles, the majority of the soil 22 is lost through the apertures 13 of the first web 8 and so excessive crop cleaning is not required. The first grader 2a is adjusted (by decreasing the gap between the top of the web 8 and the first conveyor 4a) so that a substantial amount of the crop 20, 21 travels over conveyor 4a to the second grader 2b (which is also adjusted by decreasing the gap between the first and second conveyers 4b) and then onto the discharge elevator 18 thereby by-passing the second web 10 and cleaning module 16.

In wet, sticky conditions, crop cleaning is necessary. The first grader 2a is adjusted (by increasing the gap between the first web 8 and first conveyor 4a) so that most, or all of the crop, falls downwards from the first grader 2a onto the second web 10 and then onto the cleaning module 16. The second grader 2b is also adjusted (by increasing the gap between the first and second conveyers 4a & 4b) such that any crop remaining on the first conveyer 4a may fall directly onto the cleaning module 16.

It should be appreciated that when the conditions of the soil are in between those two aforementioned extremes, the graders 2a & 2b can be adjusted appropriately to account for the degree of crop cleaning that is required.

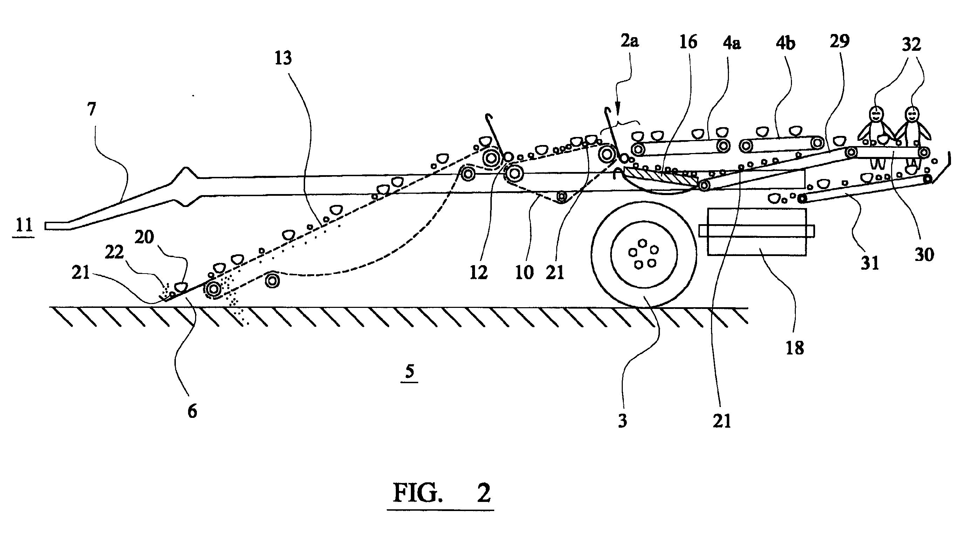

Referring to figure 2, a second embodiment of the present invention is shown in which a third conveyor 29, a manual picking table 30 and a fourth conveyor 31 are provided as well as or instead of the cleaning module 16. Some harvesters 1 have a manual picking table 30 at their rear so that any remaining clods etc can be removed by operators 32 and, in such cases, the conveyors 4a, 4b would extend over to the picking table 30. In such an embodiment, the separated flow of large potatoes 20 and small potatoes 21 could be diverted to opposite sides of the picking table 30 for ease of access and to keep the drop from the second conveyor 4b onto the picking table 30 to a minimum. Figure 2 also shows how the grading means 2a by-pass system may be located downstream of the second web 10 as opposed to immediately downstream of the first web 8 as this may be preferred for cheapness and simplicity.

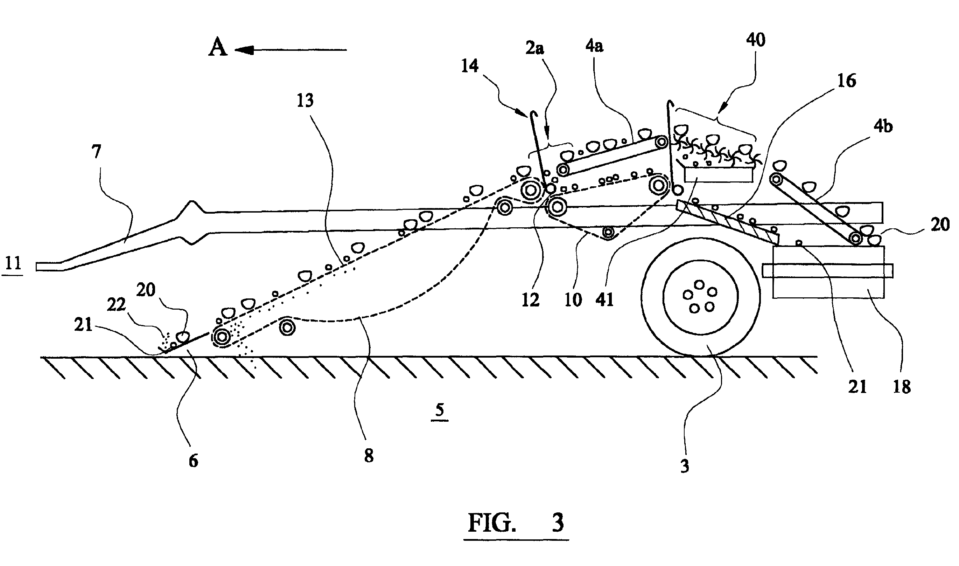

Referring to figure 3, a third embodiment of the present invention is shown in which a second cleaning module 40 and a trash conveyor 41 are provided instead of the second grader 2b. In such an embodiment, the large potatoes or vegetables 20 are also cleaned by the second cleaning apparatus 40. The soil and trash would fall on to the trash conveyor 41, directly below the second cleaning module. The cleaned crop passes on to the second conveyor 4b, then into the discharge conveyor 18 and is subsequently discharged into an accompanying trailer.

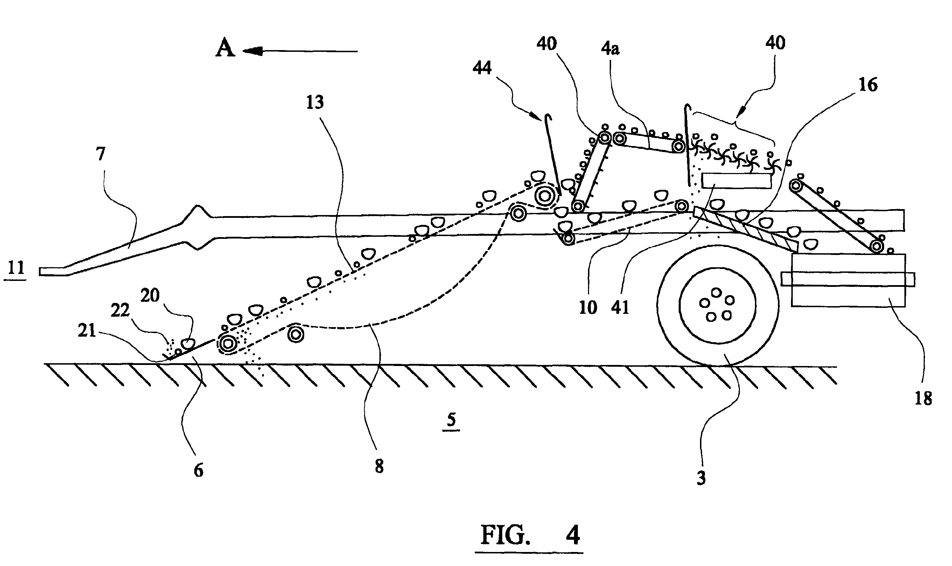

Referring to Figure 4, a fourth embodiment of the present invention is shown in which an inclined moving rubber belt grader 44 is provided instead of the crop grading means 2a. Also provided in this embodiment are the first cleaning module 16, the second cleaning module 40 and the trash conveyor 41. In such an embodiment, the size and height of the large potatoes or vegetables 20 are such that they roll down the rubber belt grader 44 and are cleaned by the first cleaning module 16 and the small potatoes or vegetables 20 which remain on the rubber belt grader 44 are cleaned by the second cleaning module 40. The inclination, position and speed of travel of the inclined belt 44 can be adjusted to vary the amount of material passing to the first cleaning module 16 or to the second cleaning module 40.

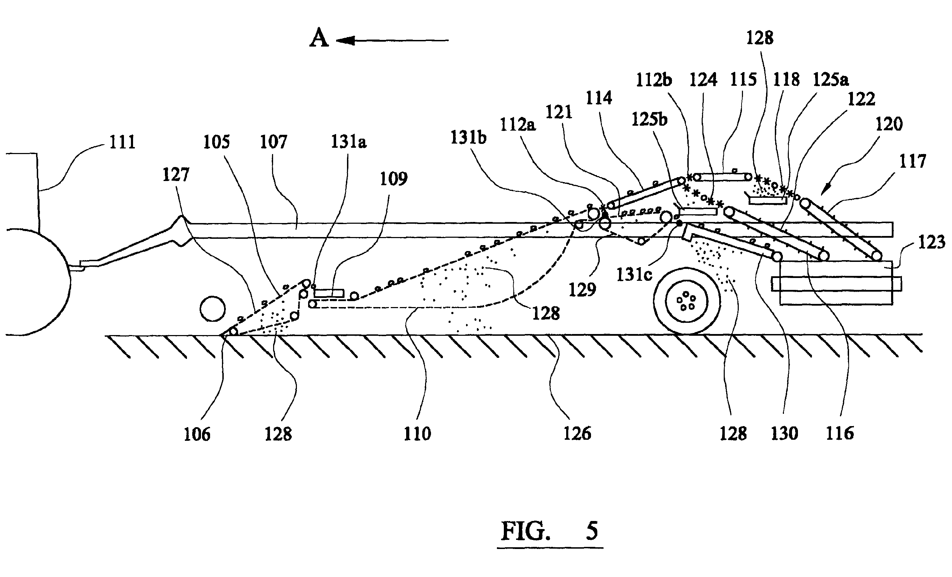

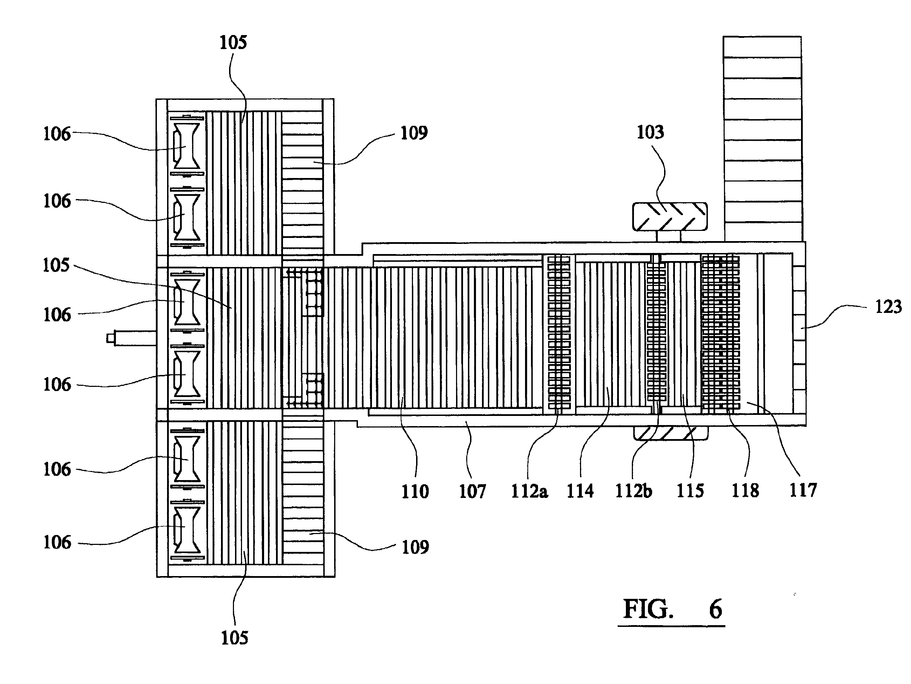

Referring to Figure 5, a root crop harvester 101 is shown comprising: a main frame 107; a plurality of shares 106; a plurality of intake webs 105 (see Figure 6), the outer ones being foldable, as will be described below; a plurality of conveying means 109 for transferring crops from the outer intake webs; a main web 110 for receiving crops from all the intake webs 105; one or a plurality of graders 112a and 112b for grading crops 120, 121, 122 by size; a first conveyor 114 for taking crop and debris to the second grader 112b; a second conveyor 115 for taking crop and debris to an upper crop cleaning means 118; the upper cleaning means 118, being for removing soil and debris 128 from an upper crop stream; a third conveyor 117 for taking the crop from the upper cleaning means 118 to a discharge elevator 123; a middle crop cleaning means 124 for removing soil and debris 128 from a middle crop stream, which has fallen through the second grader 112b; a fourth conveyor 116 for taking the cleaned crop from the middle crop cleaning means 124 to the discharge elevator 123; a plurality of trash conveyors 125a and 125b to return soil and trash to the soil surface 126; the discharge elevator 123 is for discharge of the root crop 120, 121, and 122 usually to an accompanying trailer (not shown); a second web 129 for taking a lower crop stream that has fallen through the first grader 112a, to a lower cleaning means 130; the lower cleaning means 130 being for removing soil and debris 28 from the lower crop stream.

All of the components of the harvester 101 are attached to the main frame 107 which is supported above a ground surface 126 (for example a field of root crops) at its forward end by a conventional tractor unit 111 and its rearmost end by the wheels 103. The, or each, of the shares 106 are angled downward and in a direction towards the front of the frame 107, so that when the tractor 111 pulls the harvester 101 in a forward direction (designated by arrow A), the shares 106 dig into the ground layer 126 and expose a mixture of large potatoes 120, small potatoes 121, medium potatoes 122 and soil/stones 128 etc. This mixture 120, 121, 122 and 128 is lifted onto the intake webs 105 which are driven by a power take-off shaft from the tractor 111 in a direction upwards and towards the rear of the frame 107 of the harvester 101. The smallest soil and stones 128 fall through apertures 127 in the intake webs 105 and back onto the field 126.

Material passing up the outer intake webs 105 moves to the rear and is deposited on lateral transfer means 109 (Figure 6) which move the material inwards towards the main web 110.

The crops 120, 121 122 and debris 128 that do not fall through the apertures 127 in the intake webs 105 pass on to the main web 110 via the transfer means 109. The main web 110 removes more debris 128 and transfers the crop 120, 121, 122 and remaining debris 128 rearwards and upwards to the first grader 112a. The first grader 112a is adjusted according to soil and crop conditions so that the smaller crops 121 and a proportion of the soil and debris 128 passes through the first grader 112a via the second web 129 onto the lower cleaning means 130. The lower cleaning means 130 removes soil and debris 128 and passes the smaller crop 121 directly to the discharge elevator 123.

The medium crops 122, larger crops 120 and remaining crops and debris 128 that do not pass through the first grader 112a pass over to the first conveyor 114 which conveys them to the second grader 112b. The second grader 112b is adjusted according to soil and crop conditions so that the medium crop 122 and a proportion of the soil and debris 128 passes through the second grader 112b onto the middle cleaning means 124. The middle cleaning means 124 removes soil and debris 128 and passes the medium crop 122 onto the fourth conveyor 116. The fourth conveyor 116 conveys the medium crop into the discharge elevator 123.

The larger crops 120 that do not pass through the second grader 112b pass over to the second conveyor 115. The second conveyor 115 conveys the larger crops 120 and soil and debris 128 to the upper crop cleaning means 118. The upper crop cleaning means 118 removes soil and debris 128 and passes the larger crops 120 to the third conveyor 117. The third conveyor 117 conveys the larger crops 120 into the discharge elevator 123. The discharge elevator 123 discharges all the crops 120, 121, 122 usually into a trailer. A crop storage area (not shown) may be used before the final discharge.

The soil and debris 128 that is removed by the middle crop cleaning means 112b falls onto the first trash conveyor 125b to be returned to the soil surface 126.

The soil and debris 128 that is removed by the upper crop cleaning means 118 falls onto the second trash conveyor 25a to be returned to the soil surface 126.

The webs and conveyors may include projections spaced along the length and/or width thereof to assist in the transport of the crop and to keep the grading areas clear of trash.

Haulm removal rollers 131a, 131b, 131c means may be used to remove haulm from the potatoes as they pass over the intake webs 105, the main web 110 and the second web 129.

The second web 129 may be web, a set of stars, a set of roller or other means to remove some soil and debris 128 and convey the smaller crops 121 to the lower cleaning means 130. Alternatively it may be a non-sieving conveyor.

In operation the full width of crop intake from the plurality of intake webs 105 is concentrated onto the main web 110. In a prior art set up all the crops 120, 121, 122 and soil and debris 128 would pass onto the second web 129 and lower cleaning means 130 which would cause overloading, poor separation and lead to reduction in forward speed. Alternatively the cleaning section would need to be as wide as the intake section. However, with the embodiment of the present invention in place the crops 120, 121, 122 and the soil and debris 128 are directed to the lower cleaning module 130, the middle cleaning module 124 and the upper cleaning module 118 thereby giving high output within a narrow width, because the cleaning modules are one above the other, rather than side by side. Moreover, because the cleaning means 130, 124, 118 do not have to clean such a wide range of sizes, settings can be optimised.

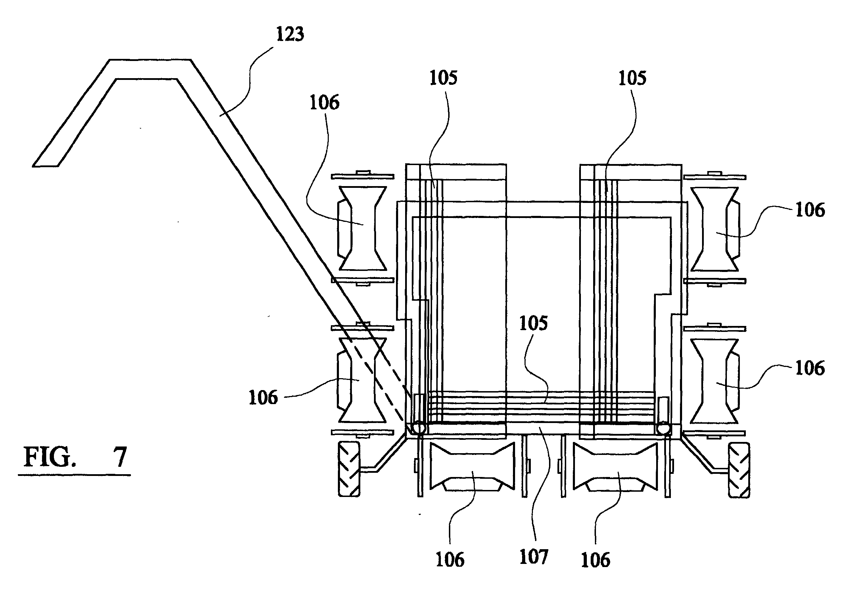

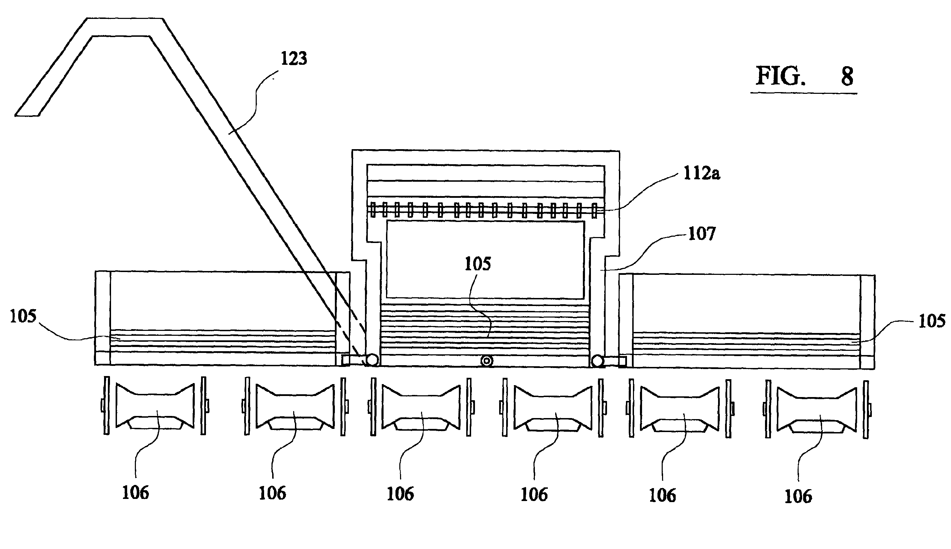

Figures 7 and 8 show the two outer intake webs 105 in raised and lowered configurations respectively. The outer intake webs 105 may be raised and secured in position for transport of the harvester 101, which may be the width of a tractor when raised, but considerably wider in the lower configuration. The increased width allows three adjacent beds to be harvested with one pass, the extra throughput generated is accommodated by the three streams, one on top of the other.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A harvester for harvesting a crop, the harvester comprising crop lifting means for lifting the crop from a soil surface, crop cleaning means for removing debris from the crop, and at least one crop grading means for separating the crop into different sizes, the crop grading means being operable to allow crops greater than a pre-determined size to by-pass the crop cleaning means.

2. A harvester as claimed in claim 1, in which the crop grading means are adjustable.

3. A harvester as claimed in claim 2, in which adjustment of the grading means allows a varying proportion of a crop to be diverted to lower, middle or upper streams of crop and debris.

4. A harvester as claimed in any one of the preceding claims, in which the crop lifting means comprises at least one section that is operable to move between operating and travelling configurations.

5. A harvester as claimed in any preceding claim, in which the grading means comprises at least one grader comprising a gap between an uppermost portion of a transport web and a first conveyor situated adjacent the web, the conveyor allowing the crop to bypass the cleaning means by taking it directly to a second grader.

6. A harvester as claimed in any preceding claim, in which the adjustment of the grading means allows a varying proportion of the crop to be diverted to a higher stream of crop and debris depending on the soil and crop conditions.

7. A harvester as claimed in any preceding claim, in which a second web is situated underneath and preferably to the rear of the first web in which crops which are below a predetermined size may fall downwards through the first grader and land on the second web.

8. A harvester as claimed in claim 7, in which the second web carries the crop to the crop cleaning means.

9. A harvester as claimed in any preceding claim, in which first and second grading means are adjustable to vary the proportion of material that passes over each of the crop cleaning means.

10. A harvester for harvesting a crop, the harvester comprising crop lifting means for lifting the crop from a soil surface, crop cleaning means for removing debris from the crop and crop grading means for separating the crop into different sizes, the crop grading means being operable to allow crops greater and/or smaller than a predetermined size to be graded into separate streams.

11. A harvester as claimed in claim 10, in which the crops may be graded into two or more streams.

12. A harvester as claimed in either claim 10 or claim 11, in which the streams are located one above the other.

13. A grader operable to be attached to a root crop harvester having crop lifting means, crop cleaning means, the grader comprising at least one bypass means attached to the crop lifting means such that material of a predetermined size may be graded into separate streams.
